# EUROPÄISCHE PATENTANMELDUNG

(11) **EP 2 728 207 A1**
(43) Veröffentlichungstag der Anmeldung: **07.05.2014**
(21) Anmeldenummer: 13188656.6
(22) Anmeldetag: 15.10.2013
(51) Int. Cl.: F16B 5/00, A47B 57/42

(54) **Verbindungssystem**

(30) Priorität: 31.10.2012 DE 102012021308
(71) Anmelder: Deere & Company, Moline, IL 61265-8098 (US)
(72) Erfinder: Garza, Alejandro Emmanuel, 25230 Saltillo (MX); Talamantes, Amilcar Carlos, 25230 Saltillo (MX)
(74) Vertreter: Reichert, Christian

(57) **Zusammenfassung**

Es wird ein Verbindungssystem (10) vorgeschlagen. Das Verbindungssystem (10) umfasst eine Sockelplatte (16), ein mit der Sockelplatte (16) verbundenes Blechprofil (12), wenigstens einen in der Sockelplatte (16) ausgebildeten Verbindungsschlitz (18) und eine am Blechprofil (12) ausgebildete Verbindungslasche (14). Um eine einfache und sichere als auch kostengünstige Blechverbindung zu schaffen wird vorgeschlagen, dass die Verbindungslasche (14) einen Haltebereich (32) und einen ersten Anschlag (52) umfasst, wobei der Haltebereich (32) in einer Montagestellung des Blechprofils (12) in den Verbindungsschlitz (18) einführbar ist, wobei der Haltebereich (32) eine in einer Verbindungsstellung mit einer Unterseite der Sockelplatte (16) in Eingriff bringbaren Fläche (48) umfasst und wobei der erste Anschlag (52) in einer Montagestellung des Blechprofils (12) frei liegt und beim Übergang von einer Montagestellung in eine Verbindungsstellung in den Verbindungsschlitz (18) einführbar und mit einem dem Haltebereich (32) gegenüber liegenden ersten Ende (20) des Verbindungsschlitzes (18) in Eingriff bringbar ist.

## Beschreibung

Die Erfindung betrifft ein Verbindungssystem mit einer Sockelplatte, einem mit der Sockelplatte verbundenen Blechprofil, wenigstens einem in der Sockelplatte ausgebildeten Verbindungsschlitz und einer am Blechprofil ausgebildeten Verbindungslasche.

Es ist bekannt, insbesondere in der Schwerindustrie bei der Herstellung von Baumaschinen oder landwirtschaftlichen Fahrzeugen, Blechverbindungen durch Schweißen oder Verschrauben herzustellen. Derartige Verbindungsmethoden sind zum einen oftmals aufwändig und erlauben möglicherweise auch kein vorgeschaltetes Lackieren der Bauteile. Ein nachgeschalteter Lackiervorgang ist oftmals zwingend jedoch mit Nachteilen behaftet, insbesondere was die Zugänglichkeit der Bauteile angeht. Es sind alternative Methoden wie Steckverbindungen mit Klemm- oder Rasteinrichtungen bekannt, die jedoch üblicherweise nur bei der Verbindung von Dünnblech- oder Kunststoffteilen eingesetzt werden können. Stärkere Bleche, insbesondere in Bereichen oberhalb von 1,5 mm weisen dazu oftmals nicht die geforderte Biegsamkeit, Verformbarkeit oder Elastizität auf bzw. weisen zu starre Materialeigenschaften auf. Ferner weisen bekannte Steckverbindungen nicht die für den Schwermaschinenbau erforderliche Festigkeit, Stabilität und Sicherheit auf.

Die der Erfindung zugrunde liegende Aufgabe wird darin gesehen, ein Verbindungssystem der eingangs genannten Art anzugeben, durch welches die vorgenannten Probleme überwunden werden.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß wird ein Verbindungssystem der eingangs genannten Art derart ausgebildet, dass die Verbindungslasche einen Haltebereich und einen ersten horizontalen Anschlag umfasst, wobei der Haltebereich in einer Montagestellung des Blechprofils in den Verbindungsschlitz einführbar ist, wobei der Haltebereich eine in einer Verbindungsstellung mit einer Unterseite der Sockelplatte in Eingriff bringbaren Fläche umfasst und wobei der erste horizontale Anschlag in der Montagestellung des Blechprofils frei liegt und beim Übergang von einer Montagestellung in eine Verbindungsstellung in den Verbindungsschlitz einführbar und mit einem dem Haltebereich gegenüber liegenden ersten Ende des Verbindungsschlitzes in Eingriff bringbar ist. Der erste Anschlag bildet mit dem ersten Ende des Verbindungsschlitzes eine Sicherung gegen horizontales Verschieben des Blechprofils in der Verbindungsstellung in Richtung des ersten Endes. Der Haltebereich bildet mit der der Unterseite der Sockelplatte zugewandten Fläche ferner einen vertikalen Anschlag, sobald der Haltebereich mit der Unterseite der Sockelplatte in Eingriff gebracht wird. Dieser vertikale Anschlag stellt eine Sicherung gegen vertikales Verschieben des Blechprofils in der Verbindungsstellung dar und verhindert ein Herausbewegen des Blechprofils aus dem Verbindungsschlitz bzw. aus der Sockelplatte.

Ferner kann der Haltebereich mit einem dem ersten Ende gegenüberliegenden zweiten Ende des Verbindungsschlitzes einen zweiten horizontalen Anschlag umfassen, so dass in der Verbindungsstellung eine Sicherung gegen horizontales Verschieben des Blechprofils in Richtung des zweiten Endes geschaffen wird.

Der Haltebereich kann als Haltewinkel ausgebildet sein, welcher in der Verbindungsstellung auf der Unterseite der Sockelplatte mit dieser in Eingriff bringbar ist. Der Haltewinkel kann durch einen ersten und einen zweiten Schenkel gebildet sein, wobei sich der erste Schenkel in der Verbindungsstellung vertikal durch den Verbindungsschlitz erstreckt. An den ersten Schenkel schließt sich ein zweiter Schenkel an und erstreckt sich in der Verbindungsstellung in Richtung des zweiten Endes des Verbindungsschlitzes horizontal an der Unterseite der Sockelplatte.

Der erste Absatz der Verbindungslasche kann eine dem ersten Ende des Verbindungsschlitzes zugewandte Stirnfläche einer Kontur am Blechprofil umfassen, wobei die Kontur einen schrägen Verlauf aufweist, der sich vom Haltebereich aus in Richtung des ersten Endes des Verbindungsschlitzes und in Richtung der Unterseite der Sockelplatte erstreckt. Der schräge Verlauf der genannten Kontur ist derart ausgebildet, dass ein gewisser Bewegungsspielraum beim Einführen der Verbindungslasche bzw. des Haltebereichs in den Verbindungsschlitz, insbesondere ein Verbringen des Blechstücks von einer Montagestellung in die Verbindungsstellung eingeräumt wird.

Am Haltebereich kann ferner eine Ausnehmung ausgebildet sein, die sich in der Verbindungsstellung ausgehend von einer mit der Unterseite der Sockelplatte in Eingriff bringbaren Fläche in Richtung des Verbindungsschlitzes erstreckt. Die genannte Ausnehmung ist derart ausgebildet, dass ein gewisser Bewegungsspielraum beim Einführen der Verbindungslasche bzw. des Haltebereichs in den Verbindungsschlitz, insbesondere ein Verbringen des Blechstücks von einer Montagestellung in die Verbindungsstellung und umgekehrt ermöglicht wird.

Das oben beschriebene Verbindungssystem umfasst vorzugsweise eine aus Stahl gefertigte Sockelplatte. Es können jedoch auch andere Materialien die vergleichbare starre Materialeigenschaften aufweisen verwendet werden. Ein damit zu verbindendes Blechteil oder Blechprofil, vorzugsweise ebenfalls aus Stahl oder einem anderen vergleichbar starrem Material, kann entsprechend der obigen Ausführungen mit einer oder mehreren parallel angeordneten Verbindungslaschen ausgestattet sein, welche in der Sockelplatte, in paralleler Ausrichtung und entsprechend der Verbindungslaschen angeordneten Abständen, ausgebildet sind. Wie im Folgenden genauer beschrieben wird, wird das Blechteil in einer Montagestellung, die ein Einführen der Verbindungslaschen am Blechprofil unter einem bestimmten Winkel gegenüber der Sockelplatte beinhaltet, mit seiner bzw. seinen Verbindungslaschen in den oder die Verbindungsschlitze eingeführt. Die geometrische Ausbildung der Verbindungslasche, insbesondere die horizontalen und vertikalen Anschläge, als auch die Ausnehmung am Haltebereich sind so gewählt, dass sie mit den Abmessungen des Verbindungsschlitzes, insbesondere mit den ersten und zweiten Enden korrespondieren. Gleiches gilt für die Stärke des Blechprofils und der Breite des Verbindungsschlitzes. Das Verbindungssystem eignet sich insbesondere für Konstruktionen die eine Lagerung oder Befestigung von schweren Bauteilen und/oder Komponenten auf einer ebenen Unterlage, beispielsweise der hier genannten Sockelplatte erfordern. So können die Blechprofile mit entsprechenden Befestigungsbohrungen versehen oder als Klemmen ausgebildet sein. Beispielsweise eignet sich diese Art von Verbindungssystem für Blechverbindungen, an denen eine Lagerung oder Befestigung von Batterien, Aggregaten, Tanks, Rahmenteile, Getriebe oder jegliche andere Art von Gehäusen vorgesehen sind.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: eine schamtische perspektivische Seitenansicht eines erfindungsgemäßen Verbindungssystems in einem demontierten Zustand,
- Fig. 2: eine schematische Seitenansicht des Verbindungssystems in einer ersten Montagestellung,
- Fig. 3: eine schematische Seitenansicht des Verbindungssystems in einer zweiten fortgeschrittenen Montagestellung,
- Fig. 4: eine schematische Seitenansicht des Verbindungssystems in einer dritten fortgeschrittenen Montagestellung,
- Fig. 5: eine schematische Seitenansicht des Verbindungssystems in einer vierten fortgeschrittenen Montagestellung,
- Fig. 6: eine schematische Seitenansicht des Verbindungssystems in einer fünften fortgeschrittenen Montagestellung und
- Fig. 7: eine schematische Seitenansicht des Verbindungssystems in einer Verbindungsstellung.

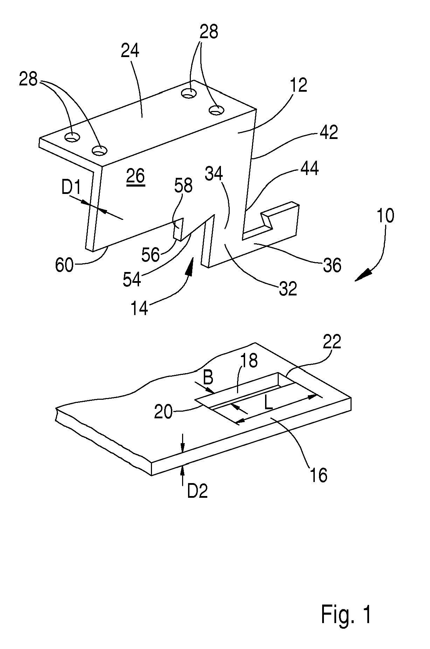

Wie in Figur 1 gezeigt umfasst ein Verbindungssystem 10 ein Blechprofil 12 mit einer Verbindungslasche 14 und eine Sockelplatte 16 mit einem darin ausgebildeten langgezogenen Verbindungsschlitz 18, der zur Aufnahme der Verbindungslasche 14 dient. Eine Stärke bzw. Dicke (D1) des Blechprofils 12 entspricht in etwa einer Breite (B) des Verbindungsschlitzes 18, so dass die Verbindungslasche 14 in den Verbindungsschlitz 18 einführbar ist. Die Sockelplatte 16 weist eine Stärke (Dicke) D2 auf. Der Verbindungsschlitz weist eine Länge L auf und wird durch ein erstes Ende 20 und ein zweites Ende 22 in seiner Länge L begrenzt.

Das Blechprofil 12 ist beispielhaft als L-Profil (Winkelprofil) mit einen sich horizontal und einen sich vertikal erstreckenden Profilteil 24, 26 ausgebildet.

An dem horizontalen Profilteil 24 sind Befestigungsbohrungen 28 zur Befestigung eines nicht gezeigten Bauteils angeordnet.

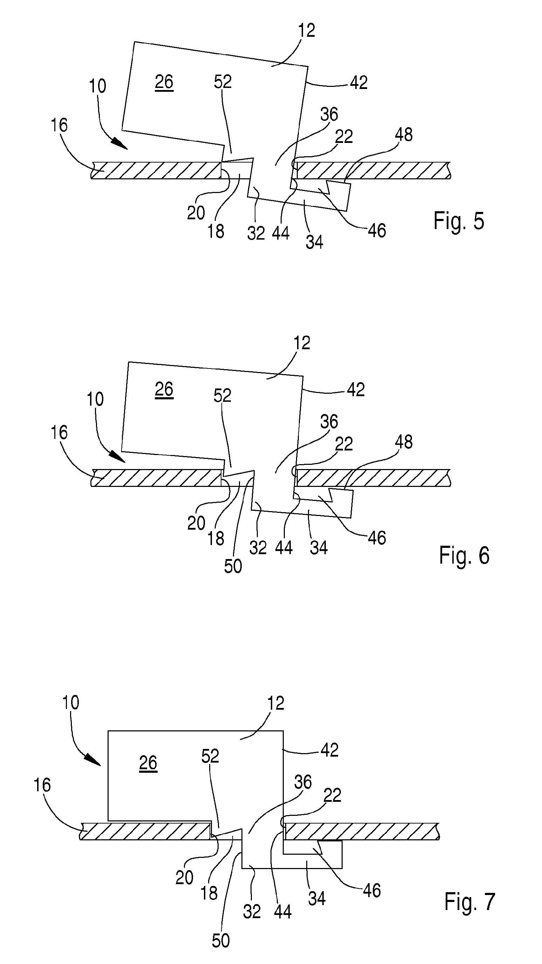

An dem vertikalen Profilteil 26 ist die sich nach unten erstreckende Verbindungslasche 14 ausgebildet. Die Verbindungslasche 14 weist einen Haltebereich 32 auf. Der Haltebereich 32 ist als Haltewinkel ausgebildet und umfasst einen vertikal ausgerichteten ersten Schenkel 34 und einen sich daran anschließenden horizontal ausgerichteten zweiten Schenkel 36. Der zweite Schenkel 36 erstreckt sich in Bezug auf eine Verbindungsstellung des Verbindungssystem 10 (siehe Figur 7) auf die Seite des zweiten Endes 22 des Verbindungsschlitzes 18 und überragt ein dieser Seite zugeordnetes Ende 42 des Profilteils 26, wobei der erste Schenkel 34 an einer dem zweiten Ende 22 des Verbindungsschlitzes 18 zugewandten Seitenfläche 44 bündig mit dem Ende 42 des Profilteils 26 abschließt. Der zweite Schenkel 36 ist ferner mit einer Ausnehmung 46 versehen, die zwischen einer in Verbindungsstellung einer Unterseite der Sockelplatte 16 zugewandten Fläche 48 und der Seitenfläche 44 des ersten Schenkels 34 angeordnet ist. Der zweite Schenkel 36 bildet mit Hinblick auf die Ausnehmung 46 und die Fläche 48 eine hakenförmige Figur.

Auf einer der Seitenfläche 44 gegenüber liegenden Seite 50 des Schenkels 36 ist ein zahnförmiger Anschlag 52 ausgebildet. Der Anschlag 52 wird durch einen Konturverlauf 54 geformt (siehe insbesondere Figur 1), der ausgehend von der zweiten Seite 50 in Richtung des ersten Endes 20 des Verbindungsschlitzes 18 schräg geradlinig nach unten verläuft und an einer Spitze 56 in eine Stirnfläche 58 übergeht, die im weiteren Verlauf der Kontur 54 von einer unteren Seite 60 des sich vertikal erstreckenden Profilteils 26 begrenzt wird, wobei die Stirnfläche 58 in einer Verbindungsstellung des Blechprofils 12 dem ersten Ende 20 des Verbindungsschlitzes 18 zugewandt ist und eine Anschlagfläche für den Anschlag 52 darstellt.

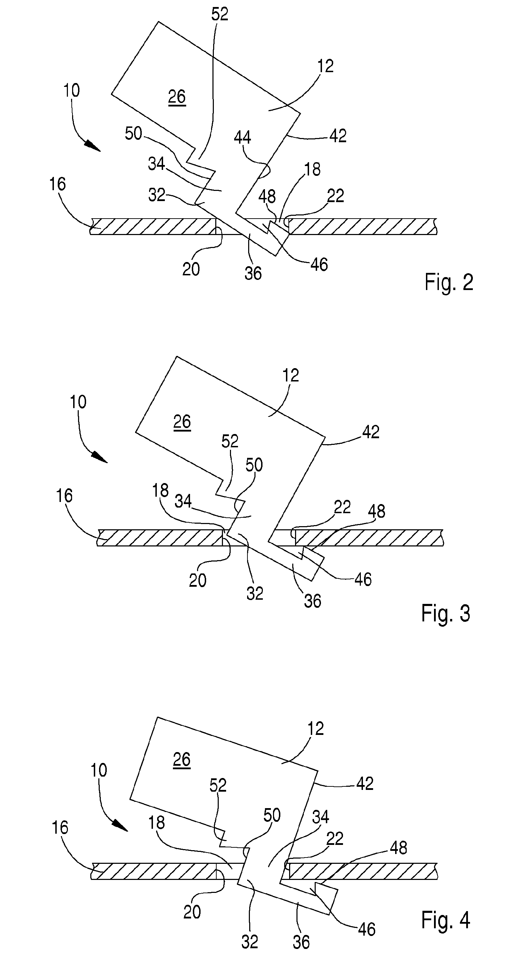

Die Verbindung des Blechprofils 12 mit der Sockelplatte 16 erfolgt nach den in den Figuren 2 bis 6 dargestellten Montagestellungen bis hin zu der die Verbindung abschließenden Verbindungsstellung in Figur 7. Das Blechprofil 12 wird in einer ersten Montagestellung (Figur 2) unter einem ersten Montagewinkel mit dem zweiten Schenkel 36 voran in den Verbindungsschlitz 18 geführt. Der erste Montagewinkel ist dabei so gewählt, dass eine untere Kante und die Fläche 48 des zweiten Schenkels gerade nicht mit den Kanten des ersten und zweiten Endes 20, 22 des Verbindungsschlitzes kollidieren. Das Blechprofil 12 wird in der gleichen Winkelstellung bis zum Anschlag der Seitenfläche 44 mit dem zweiten Ende 22 des Verbindungsschlitzes 18 in den Verbindungsschlitz 18 eingeführt. Durch stetiges Drehen des Blechprofils 12 entgegen den Uhrzeigersinn und gleichzeitiges hineinführen in den Verbindungsschlitz 18 verringert sich der Montagewinkel und die Position der Verbindungslasche 18 innerhalb des Verbindungsschlitzes 18 derart (Figuren 3 bis 5), dass sich der Absatz 52 mit seiner Stirnfläche 58 bis in den Verbindungsschlitz 18 hinein absenkt (Figur 6) und das Blechprofil 12 mit seiner unteren Seite 60 zur Auflage auf der Sockelplatte kommt. Die in dem zweiten Schenkel 36 ausgebildete Ausnehmung 46 sowie die schräg verlaufende Kontur 54 sorgen für einen kollisionsfreien Übergang von den Montagestellungen bis hin zur Verbindungsstellung und umgekehrt, falls eine Demontage des Blechprofils ansteht. Mit Erreichen der Verbindungsstellung tritt gleichzeitig die Fläche 46 mit der Unterseite der Sockelplatte in Eingriff (Figur 7). In der dargestellten Verbindungsstellung und entsprechend der im Ausführungsbeispiel dargestellten Ausgestaltung der Verbindungslasche 18 bildet der Anschlag 52 mit seiner Stirnfläche 58 eine Sicherung des Blechprofils 12 gegen eine horizontale Verschiebung in Richtung des ersten Endes 20 des Verbindungsschlitzes 18. Ferner bildet die Seitenfläche 44 des ersten Schenkels 34 einen weiteren Anschlag mit dem zweiten Ende 22 des Verbindungsschlitzes und damit eine Sicherung des Blechprofils 12 gegen eine horizontale Verschiebung in Richtung des zweiten Endes 22. Des Weiteren bildet die Fläche 48 am zweiten Schenkel 36 einen weiteren Anschlag mit der Unterseite der Sockelplatte 16 und damit eine Sicherung des Blechprofils 12 gegen eine vertikale Verschiebung des Blechprofils, insbesondere gegen ein Herauslösen aus dem Verbindungsschlitz.

## Patentansprüche

1. Verbindungssystem (10) mit einer Sockelplatte (16), einem mit der Sockelplatte (16) verbundenen Blechprofil (12), wenigstens einem in der Sockelplatte (16) ausgebildeten Verbindungsschlitz (18) und einer am Blechprofil (12) ausgebildeten Verbindungslasche (14), **dadurch gekennzeichnet, dass** die Verbindungslasche (14) einen Haltebereich (32) und einen ersten Anschlag (52) umfasst, wobei der Haltebereich (32) in einer Montagestellung des Blechprofils (12) in den Verbindungsschlitz (18) einführbar ist, wobei der Haltebereich (32) eine in einer Verbindungsstellung mit einer Unterseite der Sockelplatte (16) in Eingriff bringbaren Fläche (48) umfasst und wobei der erste Anschlag (52) in einer Montagestellung des Blechprofils (12) frei liegt und beim Übergang von einer Montagestellung in eine Verbindungsstellung in den Verbindungsschlitz (18) einführbar und mit einem dem Haltebereich (32) gegenüber liegenden ersten Ende (20) des Verbindungsschlitzes (18) in Eingriff bringbar ist.

2. Verbindungssystem (10) nach Anspruch 1, **dadurch gekennzeichnet, dass** der Haltebereich (32) in der Verbindungsstellung einen zweiten Anschlag (44) mit einem dem ersten Ende (20) gegenüberliegenden zweiten Ende (22) des Verbindungsschlitzes (18) umfasst.

3. Verbindungssystem (10) nach Anspruch 1 oder 2, **dadurch gekennzeichnet, dass** der Haltebereich (32) als Winkel ausgebildet ist, welcher in der Verbindungsstellung auf der Unterseite der Sockelplatte (16) mit dieser in Eingriff steht, wobei der Haltewinkel in der Verbindungsstellung einen sich durch den Verbindungsschlitz (18) vertikal erstreckenden ersten Schenkel (34) und einen sich daran in Richtung eines zweiten Endes (22) des Verbindungsschlitzes (18) anschließenden und sich horizontal an der Unterseite der Sockelplatte (16) erstreckenden zweiten Schenkel (36) umfasst.

4. Verbindungssystem (10) nach einem der Ansprüche 1 bis 3, **dadurch gekennzeichnet, dass** der erste Absatz (52) eine dem ersten Ende des Verbindungsschlitzes (18) zugewandte Stirnfläche (58) einer Kontur (54) am Blechprofil (12) umfasst, wobei die Kontur (54) einen schrägen Verlauf aufweist, der sich vom Haltebereich (32) aus in Richtung des ersten Endes (20) des Verbindungsschlitzes (18) und in Richtung der Unterseite der Sockelplatte (16) erstreckt.

5. Verbindungssystem (10) nach einem der Ansprüche 1 bis 4, **dadurch gekennzeichnet, dass** am Haltebereich (32) eine Ausnehmung (46) ausgebildet ist, die sich in der Verbindungsstellung ausgehend von der mit der Unterseite der Sockelplatte (16) in Eingriff bringbaren Fläche (48) in Richtung des Verbindungsschlitzes (18) erstreckt.
